Europäisches Patentamt

European Patent Office

Office européen des brevets

(11) Numéro de publication: **0 077 858**
**A1**

# (12) DEMANDE DE BREVET EUROPEEN

(21) Numéro de dépôt: 81401717.4

(22) Date de dépôt: 27.10.81

(51) Int. Cl.³: **F 16 B 5/02**

(43) Date de publication de la demande:
04.05.83 Bulletin 83/18

(84) Etats contractants désignés:
BE DE GB IT NL

(71) Demandeur: SOCIETE INDUSTRIELLE DE MECANIQUE
ET D'AUTOMATION DU FAUCIGNY (S I M A F)
170, rue de Grenelle
F-75007 Paris(FR)

(72) Inventeur: Veille, Claude
20, 10iéme avenue
F-60260 Lamorlaye(FR)

(74) Mandataire: Cabinet Martinet
62, rue des Mathurins
F-75008 Paris(FR)

(54) Ecrou cylindrique à sertir en aveugle.

(57) L'écrou est immobilisé en rotation après son sertissage dans le trou (40) d'un support (4) afin de résister à des couples de vissage s'étendant jusqu'au moins 3,6 m/kg. A cette fin, l'écrou comprend des cannelures (5) saillantes sur la périphérie externe du fourreau cylindrique (3) et sous la tête afin que ces cannelures pénètrent dans la paroi du trou (40) lors du sertissage. Les cannelures (5) peuvent être plus longues que l'épaisseur du support (4) pour que leurs extrémités sur le bulbe (60) formé lors du sertissage pénètrent dans la face cachée (42) du support. L'écrou peut comporter des cannelures (21) saillantes sur la face sous-jacente (20) de la tête qui pénètrent dans la face visible (41) du support.

FIG.5

EP 0 077 858 A1

## ECROU CYLINDRIQUE A SERTIR EN AVEUGLE

La présente invention concerne un écrou cylindrique à sertir en aveugle dans le trou d'un support. L'écrou comprend une tête à symétrie axiale et un fourreau à extrémité taraudée.

De tels écrous à sertir, appelés également rivets aveugles ou borgnes taraudés, ont actuellement leurs fourreaux ayant une surface externe complètement lisse. La fixation au support est réalisée par un pincement du support à sertir entre la tête de l'écrou et la partie du fourreau mise en bulbe par traction sous le support, du côté borgne ou non vu du fourreau. Après sertissage, la surface lisse externe du fourreau de l'écrou peut tourner dans le trou du support, ce qui rend difficile aussi bien le vissage que le dévissage de tout organe à extrémité filetée à fixer sur le support par l'intermédiaire de son vissage dans l'extrémité taraudée du fourreau de l'écrou.

L'invention a pour but de remédier aux inconvénients précédents.

A cette fin, l'écrou à sertir conforme à l'invention est caractérisé en ce qu'il comprend des cannelures saillantes sur la périphérie externe du fourreau et sous la tête. Lors de la traction exercée par l'appareil de pose de l'écrou, les cannelures pénètrent au moins dans la paroi du trou du support et ainsi immobilise en rotation l'écrou dans le support, ce qui empêche toute rotation ultérieure de l'écrou lors du vissage ou du dévissage d'un organe fileté à fixer au support.

Par exemple, pour une vis ayant un diamètre fileté de 6mm à visser dans un écrou cannelé selon l'invention, l'écrou serti dans le support reste immobile et résiste à des couples de vissage s'étendant jusqu'à 3,6 m/kg, alors que des écrous connus à fourreau lisse ayant des dimensions analogues tournent dans le trou du support sous l'action d'un couple de vissage de l'ordre de 2,4 m/kg.

Selon un mode de réalisation préféré, les cannelures de l'écrou selon l'invention sont des génératrices externes du fourreau et ont des longueurs plus grandes que l'épaisseur du support afin que celles-ci pénètrent dans la face cachée du support autour du trou, lors de la formation du bulbe. L'écrou peut comprendre un alésage lisse dans la tête entouré par les cannelures, lequel alésage a un diamètre plus grand que l'extrémité taraudée du fourreau afin que la faible épaisseur de cette partie de l'écrou puisse se prêter au pliage en bulbe.

D'autres avantages de l'invention apparaîtront plus clairement à la lecture de la description qui suit de plusieurs modes de réalisation préférés en référence aux dessins annexés correspondants, dans lesquels :

- la Fig. 1 est une vue mixte montrant d'une part à gauche de l'axe de symétrie de l'écrou cannelé, la partie externe de l'écrou avec ses cannelures et d'autre part, à droite de l'axe de symétrie, une vue en coupe de l'écrou avant sertissage sur son support ;

- la Fig. 2 est une section le long de la ligne A-A de la Fig. 1 à travers les cannelures ;

- la Fig. 3 est une vue mixte analogue à la Fig. 1 montrant l'écrou en cours de sertissage sur un support ;

- la Fig. 4 est une vue mixte analogue à la Fig. 1 montrant l'écrou serti sur le support ; et

- la Fig. 5 est une vue en perspective et en coupe axiale de l'écrou serti sur le support.

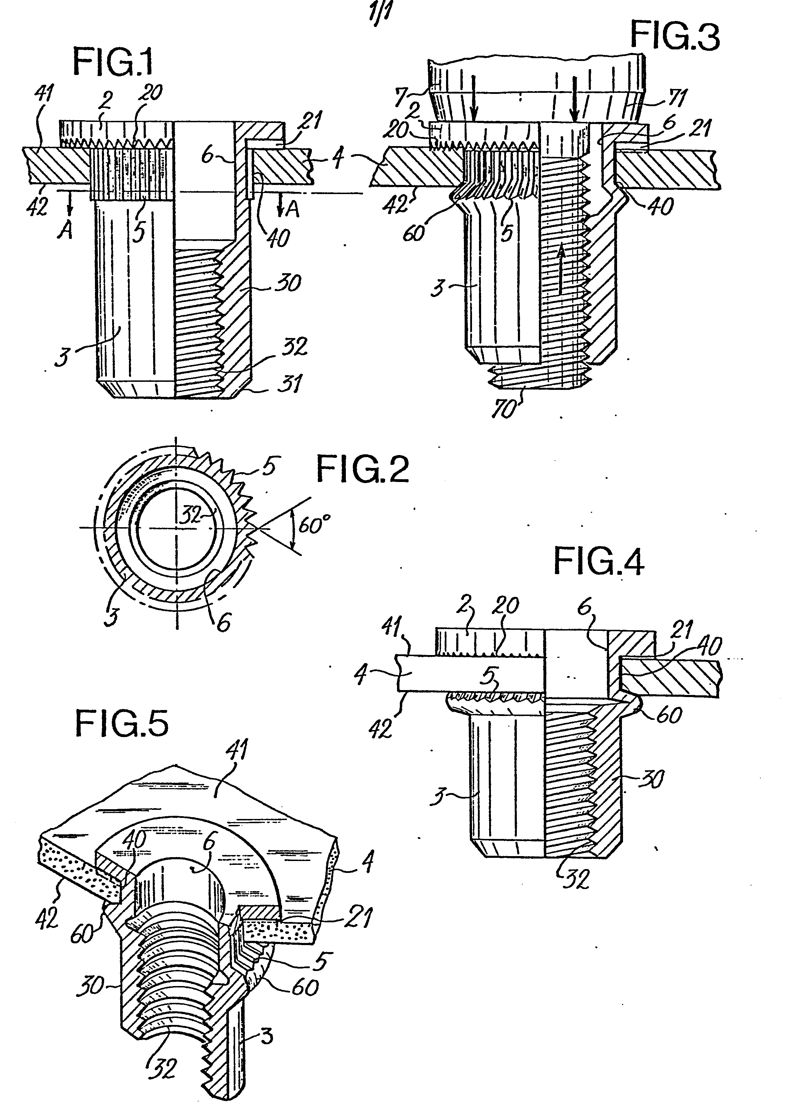

Tel que montré à la Fig. 1, l'écrou cannelé 1 comprend une tête à symétrie axiale 2, plate et cylindrique par exemple comme illustré, ou bien fraisée, et un fourreau cylindrique 3. Le fourreau 3 traverse un trou 40 pratiqué dans un support plan 4 ayant une faible épaisseur et la tête 2 repose sur l'une des faces 41 du support. Le support 4 peut être une tôle métallique ou une plaque en matière synthétique, bois ou autre matériau aggloméré tels qu'Isorel (marque déposée), contre-plaqué ou similaire. L'écrou 1 est de préférence en acier bien qu'il puisse être en acier inoxydable, laiton, duralumin ou autre alliage.

Le fourreau cylindrique 3 de l'écrou présente à l'extérieur, en partie haute, sous la tête 2, des cannelures 5 qui sont équiréparties à la périphérie du fourreau le long de génératrices de préférence plus longues que l'épaisseur du support 4. Comme montré à la Fig. 2, chaque cannelure 5 a une section pratiquement en triangle équilatéral dont une hauteur est radiale. Le diamètre de l'enveloppe externe des cannelures est pratiquement égal à celui du trou 40. Le diamètre de l'enveloppe du fond des cannelures est pratiquement égal au diamètre extérieur de la partie restante 30 du fourreau. L'extrémité de la partie 30 est terminée par un chanfrein 31.

L'intérieur de l'écrou 1 comprend un alésage axial lisse 6 qui a une longueur supérieure à celle de la tête 1 et des cannelures 5, et un trou taraudé axial 32 qui est débouchant, comme illustré, ou qui est borgne lorsqu'une étanchéité à un fluide ou à l'humidité est requise. Le diamètre de l'alésage 6 est plus grand que celui du trou taraudé 32 et a une valeur appropriée pour une déformation par sertissage, comme on le verra dans la suite.

On décrit maintenant la pose par sertissage en aveugle de l'écrou 1 sur le support 4, en référence aux Figs. 3 à 5.

Après l'introduction du fourreau 3 à travers le trou 40 du support jusqu'à l'application de la tête 2 contre la face 41 du support, l'enclume cylindrique 7 d'un appareil à sertir connu, de préférence pneumatique, est plongée dans l'alésage 6. L'extrémité filetée 70 de l'enclume 7 est vissée dans le trou 32 jusqu'à ce que l'épaulement 71 précédant l'extrémité filetée 70 soit appliquée contre la tête 2 de l'écrou.

Puis, en actionnant les poignées -non représentées- de l'appareil à sertir, une traction est produite vers le haut sur le trou taraudé 32 à l'encontre de la force d'application de l'épaulement 71 sur la tête 2, comme indiqué par les flèches opposées dans la Fig. 3. La traction provoque du côté de la face cachée 42 du support, la mise en bulbe 60 de la partie alésée 6 ayant une épaisseur relativement faible. Au fur et à mesure de la traction exercée par les poignées de l'appareil, le bulbe 60 s'écrase sous la face 42 pour former une collerette, comme montré à la Fig. 4 et les cannelures 5 pénètrent de plus en plus fortement, pour partie dans la paroi du trou 40 du support et pour partie dans le rebord du trou 40 sur la face cachée 42. Ainsi, la collerette 60 et la tête 2 entretoisent le support, et les cannelures 5 intimement ancrées au support 4 empêchent toute rotation de l'écrou 1 par rapport au support 4 lors du dévissage de l'extrémité filetée 70 de l'enclume 7 et du vissage et dévissage ultérieurs de l'organe fileté à fixer au support 4 par l'intermédiaire de l'écrou 1.

0077858

- 4 -

Selon une autre variante de l'invention, la face sous-jacente 20 de la tête contiguë au fourreau 3 comprend des cannelures saillantes 21. Ces cannelures 21 sont de préférence radiales et en nombre égal à celui des cannelures axiales 60. L'écrou cannelé selon cette variante résiste à des couples de vissage plus élevés, du fait que les cannelures 21 pénètrent et s'ancrent dans la face visible 41 du support 4 sous la pression exercée par l'épaulement 71 de l'enclume 7 lors du sertissage de l'écrou.

Ainsi, les cannelures s'ancrent dans le support et immobilisent en rotation l'écrou sur le support en trois principaux endroits, à savoir : la face sous-jacente 20 de la tête 2 contre la face visible 41, la périphérie externe du fourreau 3 contre la paroi du trou 40 et le dessus du bulbe 60 contre la face cachée 42. Les cannelures 21 de la face sous-jacente 20 de la tête et les extrémités des cannelures 5 sur le dessus du bulbe 60 entretoisent le support 4 après le sertissage de l'écrou 1.

L'écrou cannelé conforme à l'invention se pose partout où notamment :

- une fixation démontable est souhaitée,
- la pose en aveugle est nécessaire,
- aucun accès par la face arrière cachée 42 du support ne permet de fixer un écrou, tel que par exemple pour un tube profilé creux,
- l'emploi d'un écrou-rivet taraudé est nécessaire à l'assemblage de deux pièces,
- la faible épaisseur du support ne permet pas un taraudage résistant.

# 0077858

- 5 -

<u>R e v e n d i c a t i o n s</u>

1 - Ecrou cylindrique (1) à sertir en aveugle dans un trou (42) d'un support (4), comprenant une tête à symétrie axiale (2) et un fourreau (3) à extrémité taraudée (32), caractérisée en ce qu'il comprend des cannelures (5) saillantes sur la périphérie externe du fourreau (3) et sous la tête (2).

2 - Ecrou conforme à la revendication 1, caractérisé en ce que les cannelures (5) sont des génératrices.

3 - Ecrou conforme à la revendication 1 ou 2, caractérisé en ce que les cannelures (5) ont une longueur plus grande que l'épaisseur du support (4) et ont leurs extrémités plaquées contre une face (42) du support (4) après formation d'un bulbe (60) lors du sertissage.

4 - Ecrou conforme à l'une des revendications 1 à 3, caractérisé en ce qu'il comprend des cannelures (21) saillantes sur la face sous-jacente (20) de la tête (2).

5 - Ecrou conforme à la revendication 4, caractérisé en ce que les cannelures (21) de la face sous-jacente (20) de la tête sont radiales.

0077858

1/1

FIG.1

FIG.2

60°

FIG.3

FIG.4

FIG.5

))) Office européen
des brevets

**RAPPORT DE RECHERCHE EUROPEENNE**

EP 81 40 1717.4

| Catégorie | Citation du document avec indication, en cas de besoin, des parties pertinentes | Revendica-tion concernee |
|---|---|---|
| | **DOCUMENTS CONSIDERES COMME PERTINENTS** | |
| X | DE - B - 1 475 240 (VAUGHN) <br> * fig. 1 * <br> -- | 1-3 |
| X | DE - U - 1 935 793 (GIOVANNETTI) <br> * fig. 3 et 4 * <br> -- | 1-3 |
| X | GB - A - 1 178 655 (MOORE) <br> * fig. 2, signe de référence 11 * <br> -- | 1-3 |
| X | US - A - 2 401 427 (KIMBELL) <br> * fig. 5, 6 * <br> -- | 1-3 |
| A | DE - A - 2 232 554 (ROSAN SEN.) <br> * fig. 1 à 4 * <br> -- | 4,5 |
| A | BE - A - 748 704 (SONOFAM) <br> * fig. 1 à 8 * <br> -- | 1 |
| A | GB - A - 1 135 013 (HI-SHEAR) <br> * fig. 4 * <br> -- | 4,5 |
| A | FR - A1- 2 290 600 (OTALU) <br> ---- | |

**CLASSEMENT DE LA DEMANDE (Int. Cl. 3)**

F 16 B 5/02

**DOMAINES TECHNIQUES RECHERCHES (Int. Cl. 3)**

F 16 B 5/02
F 16 B 13/04
F 16 B 37/04

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a eté établi pour toutes les revendications

| Lieu de la recherche <br> Berlin | Date d'achevement de la recherche <br> 10-05-1982 | Examinateur <br> ZAPP |
|---|---|---|

OEB Form 1503.1 06.78